# EUROPEAN PATENT SPECIFICATION

(11) **EP 1 670 607 B1**
(45) Date of publication and mention of the grant of the patent: **09.04.2008**
(21) Application number: 04819598.6
(22) Date of filing: 18.11.2004
(51) Int. Cl.: B22F 3/105

(54) **IMPROVED METHOD AND APPARATUS FOR SINTERING OF INORGANIC MATERIALS**
VERBESSERTES VERFAHREN UND VERBESSERTE VORRICHTUNG ZUM SINTERN VON INORGANISCHEN MATERIALIEN
PROCEDE AMELIORE ET APPAREIL POUR LE FRITTAGE DE MATIERES INORGANIQUES

(30) Priority: 05.12.2003 IT TV030155
(43) Date of publication of application: 21.06.2006
(73) Proprietor: MBN Nanomaterialia SpA, 31050 Vascon di Carbonera (IT); LZH Laserzentrum Hannover E.V., 30419 Hannover (DE)
(72) Inventor: MATTEAZZI, Paolo, 31100 Treviso (IT); BECKER, Hinrich, 30966 Hemmingen (DE)
(74) Representative: Agostini, Agostino
(86) International application number: PCT/EP2004/013097
(87) International publication number: WO 2005/053860

(56) References cited:
- WO-A-01/56736
- WO-A-93/00171
- WO-A-20/04091834
- DE-U1- 20 020 614
- US-A1- 2001 008 230
- US-B1- 6 391 251
- "EOS brings very fine laser build powders to the UK" METAL POWDER REPORT, MPR PUBLISHING SERVICES, SHREWSBURY, GB, vol. 58, no. 9, September 2003 (2003-09), page 13, XP004454476 ISSN: 0026-0657
- SIMCHI A: "THE ROLE OF PARTICLE SIZE ON THE LASER SINTERING OF IRON POWDER" METALLURGICAL AND MATERIALS TRANSACTIONS B: PROCESS METALLURGY & MATERIALS PROCESSING SCIENCE, THE MATERIALS INFORMATION SOCIETY, US, vol. 35B, no. 5, October 2004 (2004-10), pages 937-948, XP001214017 ISSN: 1073-5623

## Description

### Field of the invention

The present invention refers to the fabrication of tridimensional solid objects from at least one inorganic material such as metals, alloys, ceramics, carbides, etc. in form of powder and to the resulting objects.

### Description of the related art

The so-called laser sintering technique is known in particular through the disclosure made by quite a number of documents, including the following.

In the U.S. patent 4,863,538 assigned to the University of Texas it is envisaged to build up a object by depositing a powdery material in successive layers which are independently sintered by a laser beam, soon after their deposition on a target area of a predetermined cross-section. The cross-section of a chosen diameter of laser beam is scanned over each layer and the beam is switched on to sinter only the powder lying within the predetermined cross-section under a control by computer means. This fabrication method is time consuming, thus of a low objectivity, in consideration of the alternate operation of the powder depositing means and of the the laser beam.

In the U.S. patent 5,730, 925 assigned to EOS GmbH it is envisaged to apply smooth successive layers of a powdery material on a plane support means by the use of a coating device which is moved two times back and forth in a direction parallel to the upper surface of the support means. The powder is subsequently "solidified" by a radiating laser beam which is directed onto each one of the smooth layers. For the functional similarity with the above discussed system the objectivity of this method is also relatively low and the efficiency of the radiating energy is also low whenever the laser beam, which is deflected by a tilting mirror, has a direction other than perpendicular to the smoothed layer of powder.

In the U.S. patent 5,904,890, also assigned to EOS GmbH and constituting an improvement of the previous one, it is envisaged to scan the radiating laser beam on each layer of powder in a pattern comprising a plurality of parallel adjacent lines of a different length, the beam having a travelling speed decreasing with increasing length of the line. Even if this system has a higher efficiency as regards the radiating energy, the objectivity remains relatively low in consideration of the alternate operation of the powder depositing means and of the scanning beam.

Other documents dealing with the subject matter of the present invention are :
- US-A-6 391 251 disclosing a method and an apparatus for forming tridimensional objects by a direct deposition layer-by-layer of a material, after it has been melt and fused, according to a model stored in a CAD unit;
- WO-A-01 56 736 which refers to a laser assisted deposition process, e.g. by laser cladding and WO-A-95 20 458 which refer to the laser cladding tecnique;
- US-A-2001 000 8230 disclosing a system for fabricating objects in which an energy beam forms a melt-pool comprising a liquid in which is subsequently incorporated feed powder.

Worth mention are also :
- WO-A-93 00 171 disclosing a nozzle having a plurality of powder guide ducts for the thin-layer alloying of metal components, which can be selectively connected to a mirror-focused or a lens-focused high-energy laser installation;
- the paper "The Role of Particle Size on the Laser Sintering of Iron Powder", published on the "Metallurgical and Material Transactions B", volume 35B, October 2004 where the actual particle sizes taken into account are ranging from 10 to 200µm.

### Summary of the invention

It is a main aim of the present invention a sintering system which is more efficient, of a higher **productivity** and simpler than those of the discussed here above.

Another aim of the invention is to obtain tridimensional objects of an even complex shape and of dimensions of less than 10 mm with a spatial resolution (**also known** as range gating) considerably better than 50 µm, that is much below the value of 100 µm which is considered as the limit value in the more recent literature.

Still another aim is to make use of particles consisting of crystallites of dimensions also considerably lower than 100 nm (i.e. 10⁻⁷ m) and obtained, for example, by means of the high energy and high capacity ball mill disclosed in the European patent 665 770. The crystallites are of two or three different materials (i.e. multi-phase) and form a powdery stream subjected to a localized heating in the laser beam.

The said aims, as well as other aims discussed here below, are obtained by the method and the apparatus which characterize the present invention according to the appended claims.

### Brief description of the drawings

The following description, with reference to the accompanying drawings of a few preferred but not unique embodiments, will explain the features of the invention and the deriving advantages.:
Fig. 1 shows an overall view of an example of apparatus for fabricating tridimensional solid objects according to the invention;
Fig. 2 shows a front and partially cross-sectioned view on an enlarged scale of a first embodiment of the parts of the apparatus where the the objects are physically fabricated;
Fig. 3 shows a front and partially cross-sectioned view on an enlarged scale of a second embodiment of the parts of the apparatus where the objects are physically fabricated;
Fig. 4 is a transversal cross-sectional view of the powder feeding unit which is an essential part of the apparatus of the invention.

### Preferred embodiments of the invention

As already discussed in the preceding paragraphs the invention refers to the fabrication of tridimensional solid objects which makes use as a raw material of a powder, consisting of particles of one or more inorganic materials (phases) like metals, alloys, ceramics, carbon, carbides etc. The powder is multi-phase so that one phase does not exceed 85% in volume while the sum of the other phases is at least 15% in volume and has a melting temperature below 80% of the melting temperature in °C of the first phase.

Many other examples of usable powder could be mentioned and are accessible from the metallurgical literature such as :

| First phase | | Second phase | |
|---|---|---|---|
| Metal or alloy | Melting temp. [°C] | Metal or alloy | Melting temp. [°C] |
| Fe | 1535 | FeP (10 wt% P) alloy | 1050 |
| Fe | 1535 | FeC (4.2 wt% C) alloy | 1150 |
| Ti | 1670 | Sn | 230 |
| Cu | 1083 | Sn | 230 |
| Cu | 1083 | Zn | 420 |
| Fe | 1535 | FeCu alloy | 1083 ÷ 1535 ⁽⁺⁾ |
| Ti | 1670 | Ti-Sn alloy | 230 ÷ 1670 ⁽⁺⁾ |

| | | | |
|---|---|---|---|
| Legenda : ⁽⁺⁾ = temperature depending on the actual compositionof the alloy. | | | |

Powders consisting of iron (first phase), having a melting temperature of 1535°C, and copper (second phase), having a melting temperature of 1083°C, namely about 70% of the iron melting temperature proved to be particularly usable for the intended aims.

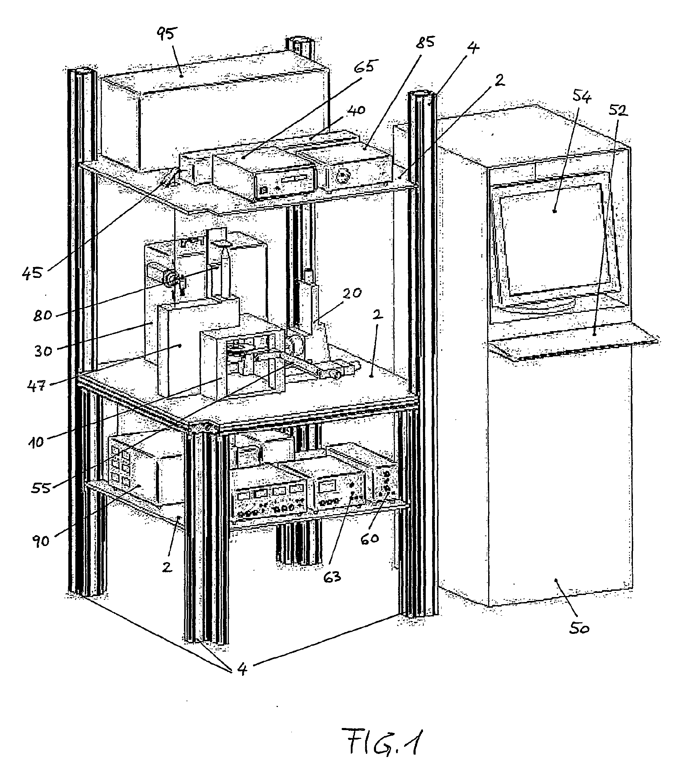

With reference to Fig. 1, an apparatus according to the invention basically consists of the following units, most which are described more in detail in the subsequent paragraphs :
- a device 10, in which the object is formed;
- a feeding unit 35, best seen in Fig. 5, in which a solid aerosol is obtained by mixing the multi-phase powder with an inert carrier gas like argon, helium, nitrogen or composites thereof, supplied from a reservoir 90. The powder is produced in a step preceding the method of the present invention by causing crystallites of less than 100 nm (10⁻⁷ m) to agglomerate into particles of a controlled size. For the fabrication of highly precise objects, or parts thereof like their periphery, about 90% in weight of the powder consists of particles comprised in the dimensional range 0.5 to 20 µm (5 x 10⁻⁷ to 2 x 10⁻⁵ m).
- a device 30 which receives the powder from the feeding unit 35 and ensures its introduction as a powdery stream into a target area arranged in the forming device 10;
- a generator 45 of a heating flux consisting of an emitter capable of generating a laser beam LB and of addressing this beam into the forming device 10 thanks to an aiming device 47. In order to achieve the above mentioned spatial resolution a high-quality laser beam must be used such as a pumped diode Yb:YAG (ytterbium:yttrium-aluminium-garnet) disk laser or a fiber laser and a suitable optical system for guiding and forming the laser beam LB to the aiming device 47. An electron beam with comparable or even better performance can also be used;
- a programmable control unit 50 including a keyboard 52 and a monitor 54.
   In a conventional manner, for example by means of an electric harness (not shown), the control unit 50 is connected to the above listed functional units as well as to the following ancillary units, all of which are positioned on various shelves 2 fixed to the columns 4 of a supporting structure;
- ultrasonic devices 60 associated to the powder feeding unit 35 and adapted to prevent the deposit of the powder particles in form of agglomerates by keeping the particles detached from parts of the feeder by vibrating at high frequency;
- a device 62 for monitorring in the chamber 10 the oxygen contents, which shall not exceed 100 ppm;
- a device 65, for example a high resolution CCD camera, for an on-line shape and thickness control of the object fabricated;
- a system for monitoring the temperature inside the forming chamber 10 which preferably includes a pyrometer optical viewer 80 and an associated control box 85. In order to achieve the above mentioned spatial resolution, the pyrometer must have a resolution better than 100 µm in a temperature range of 1000 to 3000°C and is installed on the optical axis of the laser beam;
- a microscope unit 55 for viewing a object during its fabrication inside the forming device 10;
- a cooling unit 95.

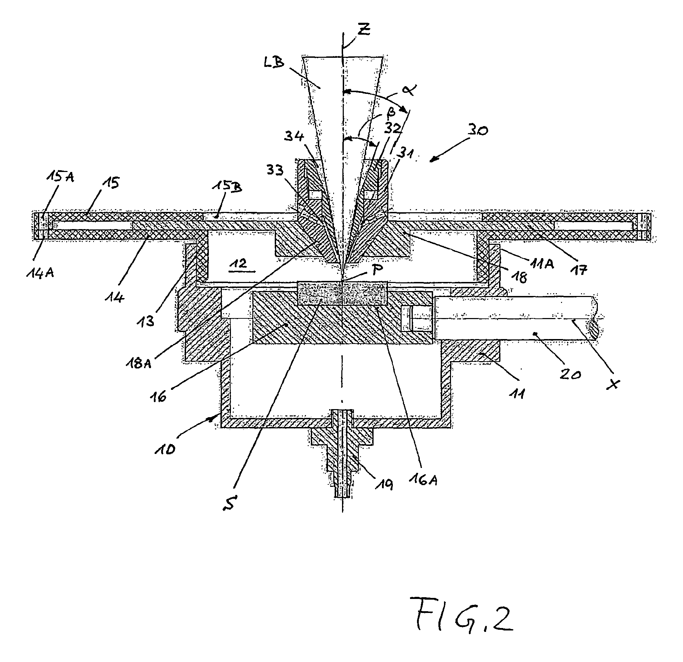

With reference now to a first embodiment of the invention, shown in detail in Fig.2, it can be seen that the forming device 10 comprises an lower or first disc 14 and an upper or second disc 15. The first disc 14 has a central round opening defined by a rim 13 extended downwards and a flat outer periphery with a plurality of threaded holes 14A. The second disc 15 has an outer rim which protrudes downwards and is provided with threaded holes 15A corresponding tho the holes 14a so as to permit the mutual fixation of the discs 14 and 15 by means of screws (not shown). The gap between the facing flat portions of the discs 14 and 15 is such to allow the arrangement in between, with some clearance, of an intermediate or third disc 17, which is aligned with the other discs. The second disc 15 is provided with a central round opening 15B, somewhat larger than the corresponding central opening of the first disc 14.

The upper portion 11A of a cup 11 is fitted with some clearance around the rim 13 of the first disc 14 and connected to known driving means so as to slide along said rim. A forming chamber 12 is thus defined by the interior of the rim 13, beneath the third disc 17, and by a rigid base 16 with the target area where the object is fabricated, the base 16 being movably supported by a horizontal shaft 20 passing through the lateral wall of the cup 11. In the embodiment illustrated in Figure 2 the target area is a rigid substrate S carried by a recess 16A in the upper face of the base 16. In conformance with the expected results, the substrate S can be made and positioned in the forming chamber 12 so as to form a part of the surface of the object to fabricate which is different from the remaining parts. Alternatively, when the object fabricated is self-supporting, the substrate S can merely form a part detachable from the sintered material at the end of fabrication. According to a feature of the invention, the cup 11 and the shaft 20 are connected to separate conventional driving means (not shown), such as ultrafine stepper motors, as better clarified here below.

The atmosphere inside the forming device 10 is monitored by suitable sensing means (not shown), which are connected to the device 62 for monitoring the contents of oxygen, which preferably shall not exceed 100 ppm. Additionally the bottom of cup 11 is connected by known tube means and a fitting 19 to a vacuum pump (not shown) providing a depression down to 10⁻² bar in the forming device 10 assisting the particles feeding and collecting the needless residuals of the powder.

The radially inner region of the third disc 17 is in form of a thick hub 18 of a smaller diameter than the central aperture 15A of the second disc 15. A frustoconical aperture 18A, which is aligned along the axis Z and of a cross section decreasing in the direction of the cup 11, is provided in the hub 18 and the already mentioned device 30 is arranged in said aperture 18A.

In this embodiment, the device 30 comprises an outer cone 31 (more precisely, a frustum of a cone) and an inner cone 32 (also, actually, a frustum of a cone) which are aligned along the axis Z and accomodated in the frustoconical aperture 18 of the hub-like region 16 of the third disc 17.

The outer and the inner cones 31, 32 are arranged one inside another so as to create a substantially annular gap 33 of a width lesser than 1 mm in order to obtain the desired speed of the powdery stream. The cones 31, 32 are connected to one another by rods (not shown) to vary their mutual adjustment, and consequently the width of the gap 33 preferably in the range 0.1 to 0.8 mm. In any case, the powdery stream has the shape of a conical surface having its vertex in a point P of the target area, namely of the substrate S in the illustrated embodiment. The speed of the powdery stream does not exceed 20 m/s.

The inner cone 32 of the device 30 has a frusto-conical channel 34 for the laser beam LB, as better described herebelow, which is aligned along the axis Z and has a cross-section decreasing in the direction of the cup 11 of the forming chamber 10. The vertex angle of channel 34 is designated by β in Figure 2.

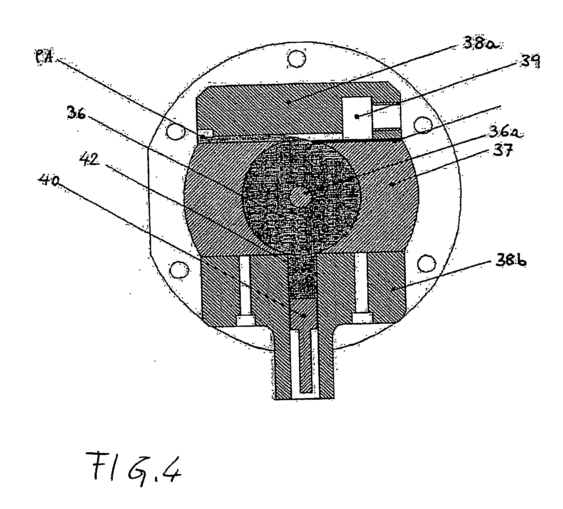

The unit 35 for feeding the powder to the device 30 - which is best seen in Fig. 4 and plays an important role in the invention - substantially consists of a bristled brush 36 fixed onto a motorized axle 36a so as to rotate clockwise. The brush 36 is accomodated in a housing 37 having a top cover 38a with an aperture 39 which is connected to the reservoir 90 of the carrier gas as well as a bottom cover 38b. The brush 36 serves for the ablation of the particles supplied from a reservoir 42 where they are stored in solid form. A piston 40, housed in the bottom cover 38b, urges the powder stored in reservoir 42 against the upstream side of the brush 36. A flat element 41, arranged tangentially to the brush 36 at its downstream side, pushes the elastically deformable bristles of the rotating brush 36, catapulting the particles out of the brush 36 while reaching non deformation status and producing a solid aerosol PA starting from the ablated particles and the carrier gas supplied through the aperture 39. More details about a powder feeding unit of the described type and its use can be found in the German Utility Model 200 20 614 U1, published on 12.04.2001, which is expressly incorporated here by reference. Due to this construction of the feeding unit 35 the particles in the solid aerosol PA have a controlled dimensional distribution, in particular 90% in weight of the particles are of a dimension in the range 0.5 to 20 µm. The powder feeding unit can also be constructed in such a way to comprise two or more powder reservoirs, each of them containing one material type powder, as mentioned above.

According to an important feature of the invention, the solid aerosol PA produced in the powder feeding unit 35 as above described, is fed to the device 30 wherefrom it comes out into the forming chamber 12 through the annular gap 33. The solid aerosol PA constitutes the powdery stream with the shape of a conical surface having its vertex P positioned on the target area, namely the substrate S in the illustrated embodiment, and Z is the axis of said conical surface which has a vertex angle α of less than 45°. At least during the formation of the object in the present apparatus, the cones 31 and 32 and the rods connecting said cones to one another are kept vibrating by the ultrasonic device 60. Thus the particles in the solid aerosol PA are prevented from agglomerating and adhering to the mutually facing inner surfaces of the cones 31 and 32 that define the gap 33.

According to another important feature of the invention, the laser beam LB - which is generated by the source 45, addressed by the aiming device 47 which is formed by a conventional arrangement of optics - is caused to pass through the conical channel 34 of the inner cone 32 of the device 30 and consequently is of a conical shape with an angle substantially equal to the vertex angle β of the channel 34. The angle β of the conically shaped laser beam LB is in any case lesser than the corresponding vertex angle α of the simultaneously generated conical powdery stream. The laser beam LB is, according to still another feature of the invention, correlated to the dimensional distribution of the particles in the powdery stream, namely the majority of the size distribution in weight of the particles does not exceed the width of the laser beam LB. In particular, when objects of a high precision, or portions thereof is selected such that about 90% of particles have a size comprised in the range 0.5 to 20 µm and the focus diameter of the laser beam LB does consequently not exceed 20 µm. For further applications, where such a high precision of the fabricated objects is either not required or only required on specific portions of the objects, it is foreseen to extend the focus diameter up to dimensions of 150 µm with a corresponding increase in the power of the laser beam LB.

According to the invention, an object is fabricated as follows. The solid aerosol PA (consisting of one or more phases, as above specified) is fed from the unit 35 to the device 30 and herein becomes a powdery stream of a conical shape which is directed into the forming chamber 12, more precisely towards the target area, namely the substrate S in the illustrated embodiment.

Simultaneously the laser beam LB is also focused onto the vertex P of the conically shaped powdery stream, which lies onto the target area (substrate S). In the meantime, throughout the fabrication of the desired object, anat least bidimensional relative movement is maintained between the target area, the powdery stream and the laser beam thanks to the already mentioned driving means. In the illustrated embodiment, the cup 11 is moved up and down along the rim 13 in the direction of the vertical axis Z and possibly also rotated around the same axis while the entire device 30 is moved on a horizontal plane with the third disk 17 in the gap between the flat faces of the first and second disc 14 and 15 and the base 16 is also rotated, if necessary, around the horizontal axis X with the shaft 20. All of the said movements are controlled by the programmable control unit 50 in accordance with the design of the object to fabricate.

Due to the above described features, the powder of the solid aerosol PA is sintered istantaneously and in a single step directly onto the substrate S, thus fabricating a tridimensional solid object as desired and designed with the help of a CAD/CAM system. In particular the invention permits the realization of tridimensional solid objects having a range gating which is not only better than 50 µm but even lower than 10 µm.

The following factors play an important role in the claimed achievement:
- the highly precise monitoring of the sintering temperature which is ensured by a control of the power of the laser beam LB performed through a PID (Proportional gain-Integral-Derivative) algorithm. This factor is of a particular importance for a good and industrially reproduceable quality of the object fabricated according to the good and industrially reproduceable quality of the object fabricated according to the invention;
- the implementation of an on-line shape and thickness control allowing to check the actual status of the object fabrication;
- the implementation of an offline visual control realised by an electronic microscope of high resolution which enables on one hand viewing the results achieved and on the other hand evaluating the spatial resolution achieved;
- the control of the oxygen contents within the forming chamber 12;
- the adoption of Hot Isostatic Pressing (HIP) allowing the elimination of any internal residual porosity and the achievement of a full density in. the fabricated object.

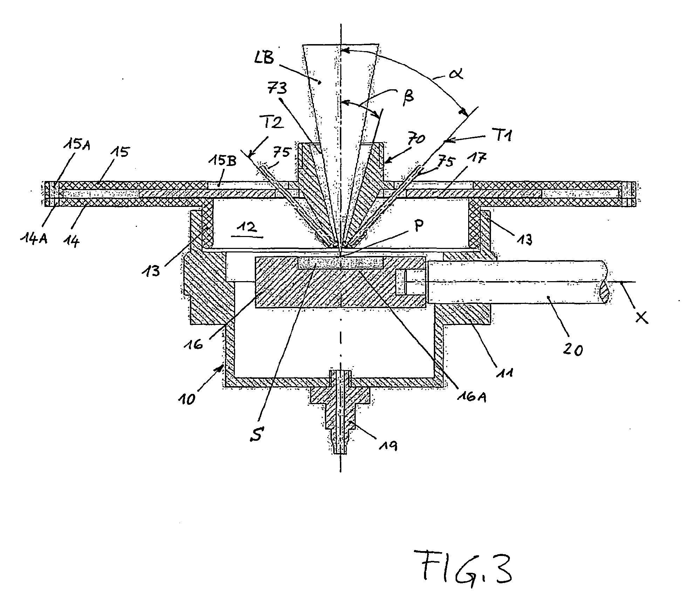

Fig. 3 illustrates a second embodiment of the apparatus of the invention which is particularly advantageous when the inorganic material used to obtain the solid aerosol PA consists of two or more than two phases. Since most parts remain the same as the preceding embodiment, they retain the same reference numeral and are not described another time. Also the resulting method is the same of the first embodiment.

The laser beam LB is directed through the conical channel 73 of a pointer 70 onto the target area, namely onto the substrate S positioned in the recess 16A of the base 16, arranged inside the forming device 10, wherein reference numeral 12 again designates the forming chamber. The pointer 70 is supported through adjustable means (not shown) by the third disc 17, which also supports a plurality of thin pipes 75, which are connected to corresponding feeding units (which are of the above described type) of the various phases of the inorganic material used to obtain the solid aerosol PA. The pipes 75 are supported by the third disc 17 in such a manner that their axis T1, T2, etc are arranged at an angle α not exceeding 45° and are kept vibrating during the operation of the apparatus. Thus, the resulting powdery stream is in the shape of a conical surface having as vertex a point P on the target area (namely the substrate S in the illustrated embodiment) and the vertex angle α (of less than 45°, as above mentioned) is wider than the vertex angle β of the cone-shaped laser beam LB, which is determined by the channel 73 of the pointer 70. As a result, the powdery stream obtained from the solid aerosol PA is sintered istantaneously and in a single step directly on the target area (substrate) S and the desired tridimensional object is fabricated thanks to the at least bidimensional relative movement between the target area, the powdery stream and the laser beam ensured by the above entioned driving means.

From the preceding description the advantages of the invention can be summarized as follows :
(a) the fabrication of a tridimensional solid object takes place in a single step due to the fact that the powder is directly sintered by the laser beam. Then the fabrication is more efficient, from the industrial point of view, than when the methods and apparatuses of the state of art are utilized;
(b) the inorganic materials used can consist also of two or more powder types (each constiting of different phases) which can be fed in different moments under the laser beam LB. In said case the power of the laser beam can be selected in order to obtain that only the phases of a lower melting temperature are actually melted at the vertex of the conical surface of the powdery stream. In this way, different materials types can be deposited in a single layer, and the whole part can be constructed with different materials gradients on the scale of the spatial resolution;
(c) the precision obtainable is high due to the mechanical interconnection between the means generating and directing the powder stream and the means directing the laser beam;
(d) a high objection rate can be obtained due to the small dimensions of the particles in the powdery stream and of the laser beam and also due to the uniformity ensured by keeping vibrating the nozzle and the supply pipes which generate the powdery stream, so that the powder is prevented from adhering thereto;
(e) since it is possible to adjust either the width of the gap in the device 30 of the first embodiment or the angular arrangements of the supply tubes 75 in the second embodiment, the production rate can be varied.

Other embodiments and variants of the invention should be developed within the scope of the appended claims, such as :
- instead of moving the cup in the forming chamber, the laser beam and the nozzle and the supply pipes which generate the powdery stream should be moved to obtain the at least bidimensional relative movement;
- the powdery stream should be addressed directly onto a target area where no substrate is provided;
- instead of by a laser beam, the heating flux for sintering the inorganic materials should be generated either by an induction coil coaxial to the powdery stream or by an infrared heater or by an electron beam or by a microwave generator

## Claims

1. A method for fabricating a tridimensional solid object with a spatial resolution or range gating better than 50 µm from inorganic particles **formed by more than one phase and of** a controlled size distribution, in which at least one powdery stream of the said particles and at least one heating flux are simultaneously directed onto a rigid target area while an at least bidimensional relative movement is maintained between the target area, the powdery stream and the heating flux, and in which the powdery stream has the shape of a conical surface having as its axis (Z) the direction of the heating flux and its vertex (P) onto said target area and a vertex angle (α) not exceeding 45°, **characterized in that** the dimensional distribution of said particles is selected in such a way that 90% in weight of the particles have a size comprised in the range 0.5 to 20 µm, said particles consisting of agglomerated crystallites of a size lower than 10⁻⁷ m and being mixed in the powdery stream with at least one carrier gas so as to constitute a solid aerosol, and the heating flux is so selected as to have a width on the target area not exceeding 20 µm, with the result that the object is fabricated in a single operation by sintering of the particles directly onto the target area, and **in that** said particles, in selectable different powdery streams, are formed by at least two phases, a first phase not exceeding 85% in volume of the **particle and** the sum of the other phases being at least 15% in volume of the **particle** and having a melting temperature in °C lower than 80% of the melting temperature of said first phase, **whereby** only the low melting phases **are** actually **molten** during said single operation.

2. A method for fabricating by sintering a tridimensional solid object according to claim 1, **characterized in that** the powdery stream is directed onto the target area at a speed not exceeding 20 m/s.

3. A method for fabricating by sintering a tridimensional solid object according to claim 1 or 2, **characterized in that** the target area comprises a rigid substrate (S) positioned onto a rigid base (16) which is movably supported in a forming chamber (12) extended below said rigid base (16) in form of a cup (11) which is maintained at a controlled atmosphere with an oxygen contents not exceeding 100 ppm through a depression created in the forming chamber (12).

4. A method for fabricating by sintering a tridimensional solid object according to any of the preceding claims, **characterized in that** the particles are prevented from agglomerating and adhering during the flow before being directed onto the target area by means of ultrasounds.

5. A method for fabricating by sintering a tridimensional solid object according to any of the preceding claims, **characterized in that** it is entirely controlled by a CAD/CAM system.

6. A method for fabricating by sintering a tridimensional solid object according to any of the preceding claims, **characterized in that** the heating flux consists of a cone-shaped laser beam (LB) having a vertex angle (β) lesser than the vertex angle (α) of the conical surface formed by said powdery stream.

7. A method for fabricating a tridimensional solid object by sintering inorganic particles of controlled size distribution according to claim 6, **characterized in that**, in order to fabricate portions of the object where the high precision entailing a spatial resolution better than 50 µm, is not required, the focus diameter of said laser beam (LB) is increased up to 150 µm with a corresponding increase of the size of the particles in the powder stream.

8. A method for fabricating by sintering a tridimensional solid object according to any of the claims 1 to 5, **characterized in that** the heating flux is generated by any of the following means : an electromagnetic induction coil arranged coaxially to the powdery stream, a radiant heat generator, such as an infrared heater, an electron beam, a microwave generator.

9. A method for fabricating by sintering a tridimensional solid object according to any of the preceding claims, **characterized in that** it comprises a final step consisting of an isostatic pressing at high temperature to eliminate any internal residual porosity and achieve a full density in the fabricated object.

10. An apparatus for fabricating a tridimensional solid object having a spatial resolution or range gating better than 50 µm by sintering inorganic particles with a controlled size distribution and implementing the method of any of the claims 1 to 9, comprising:
- a rigid target area,
- means generating a correlated heating flux,
- means generating at least one powdery stream of inorganic solid particles with a controlled dimensional distribution and comprising a device (30) formed by a first and a second cones (31, 32), adjustable to each other, connected to one another in such a way that an adjustable annular gap (33) is created between said cones (31, 32) having their axis (Z) in common with the heating flux, whereby the powdery stream has the shape of a conical surface
- driving means for providing an at least bidimensional relative motion between the target area, the device (30) generating the powdery stream and the heating flux, whereby the particles of the powdery stream are heated by said heating flux so as to be sintered in a single operation directly onto the target area,
**characterized in that** the target area is provided on a rigid base (16) supported in a forming chamber (12) extended below said base (16) in form of a cup (11), a fitting (19) being arranged at the bottom of said cup (11) for the connection through tube means to a vacuum source.

11. An apparatus for fabricating a tridimensional solid object by sintering inorganic particles with a controlled size distribution, and implementing the method of any of the claims 1 to 9, comprising:
- a rigid target area,
- means generating a correlated heating flux,
- means generating at least one powdery stream of inorganic solid particles of a controlled dimensional distribution, consisting of a plurality of rectilinear pipes (75) having their axis (T1, T2,...) inclined at the same angle (α) with respect to the axis (Z) of the rectilinear heating flux, in such a manner that the powdery stream is in the shape of a conical surface coaxial with the heating flux,
- driving means for providing an at least bidimensional relative motion between the target area, the rectilinear pipes (75) and the heating flux, whereby the particles of the powdery stream are heated by said heating flux so as to be sinterized in a single operation directly onto the target area,
**characterized in that** the target area is provided on a rigid base (16) supported in a forming chamber (12) extended below said base (16) in form of a cup (11), a fitting (19) being arranged at the bottom of said cup (11) for the connection through tube means to a vacuum source.

12. An apparatus for fabricating a tridimensional solid object by sintering inorganic particles of controlled size distribution according to claim 10 or 11, **characterized in that** it comprises:
- an emitter (40) of a laser beam (LB) as means generating said heating flux, the emitter being associated to known pointing means (47), and
- a device (65), for example a high resolution CCD camera, for an on-line shape and thickness control of the object fabricated.

13. An apparatus for fabricating a tridimensional solid object by sintering inorganic particles of controlled size distribution according to any of claim 10 or 11, **characterized in that** it comprises an electromagnetic induction coil arranged as means generating said heating flux.

14. An apparatus for fabricating a tridimensional solid object by sintering inorganic particles of controlled size distribution according to any of the claims 10 to 13, **characterized in that** it comprises an infrared heat generator or an electron beam or a microwave generator as means generating said heating flux.

15. An apparatus for fabricating a tridimensional solid object by sintering inorganic particles of controlled size distribution according to any of the claims 10 to 14, comprising a powder feeding device having a rotary brush (36), an element (41) for the elastic deformation of said brush (36) and supplied with a carrier gas in order to feed the powdery stream to the forming chamber as a solid aerosol (PA),
**characterized in that** it also comprises ultrasonic means to keep vibrating at least a part of said powder feeding device to prevent the particles from agglomerating and adhering during the flow before being directed onto the target area.

16. An apparatus for fabricating a tridimensional solid object by sintering inorganic particles of controlled size distribution according to any of the claims 10 to 15, **characterized in that** it also includes per se known measuring instruments, preferably including a pyrometer (80) aimed at the target area, and an associated control box (85) to monitor the temperature at the target area (11).

## Patentansprüche

1. Verfahren zur Herstellung eines dreidimensionalen Festkörpers mit einer räumlichen Auflösung oder einem Durchlassbereich, besser als 50 µm, aus anorganischen Partikeln, gebildet aus mehr als einer Phase, und einer gesteuerten Größenverteilung,
worin mindestens ein pulverförmiger Strom aus den Partikeln und mindestens ein erhitzendes Flussmittel gleichzeitig auf ein starres Zielgebiet gerichtet sind,
während eine mindestens zweidimensionale Relativbewegung zwischen dem Zielgebiet, dem pulverförmigen Strom und dem erhitzenden Flussmittel aufrechterhalten wird, und
worin der pulverförmige Strom die Form einer kegelförmigen Oberfläche, als seine Achse (Z) die Richtung des erhitzenden Flussmittels, und seine Spitze (P) auf dem Zielgebiet, und einen Spitzenwinkel (α), der 45° nicht überschreitet, hat, **gekennzeichnet dadurch, dass**
die Größenverteilung der Partikel auf solche Weise gewählt wird, dass 90 Gewichts-% der Partikel eine Größe haben, die im Bereich von 0,5 bis 20 µm eingeschlossen sind,
die Partikel aus zusammengeballten Kristalliten mit einer Größe von unterhalb 10⁻⁷ m bestehen und im pulverförmigen Strom mit mindestens einem Trägergas gemischt sind, um somit ein Aerosol mit festen Partikeln zu bilden, und
das erhitzende Flussmittel so gewählt ist, dass es auf dem Zielgebiet eine Breite hat, die 20 µm nicht überschreitet,
mit dem Ergebnis, dass der Gegenstand in einem einzigen Arbeitsgang durch Sintern der Partikel direkt auf dem Zielgebiet hergestellt wird, und dass
die Partikel in wählbaren, unterschiedlichen pulverförmigen Strömen durch zumindest zwei Phasen gebildet werden, wobei eine erste Phase 85 Volumen-% der Partikel nicht übersteigt, und die Summe der anderen Phasen mindestens 15 Volumen-% der Partikel ist, und eine Schmelztemperatur in °C niedriger als 80 % der Schmelztemperatur der ersten Phase hat, wobei
nur die niedrigschmelzenden Phasen tatsächlich während des einzigen Arbeitsgangs geschmolzen werden.

2. Verfahren zur Herstellung eines dreidimensionalen Festkörpers durch Sintern, gemäß Anspruch 1, **gekennzeichnet dadurch, dass** der pulverförmige Strom mit einer Geschwindigkeit auf das Zielgebiet gerichtet ist, die 20 m/s nicht überschreitet.

3. Verfahren zur Herstellung eines dreidimensionalen Festkörpers durch Sintern gemäß Anspruch 1 oder 2, **gekennzeichnet dadurch, dass** das Zielgebiet ein starres Trägermaterial (S) aufweist, auf einer starren Basis (16) positioniert ist, die in einer Formgebungskammer (12) beweglich gelagert ist, die sich unterhalb der starren Basis (16) in Form eines Bechers (11) nach unten erstreckt, die bei einer geregelten Atmosphäre mit einem Sauerstoffgehalt, der 100 ppm nicht überschreitet, durch einen Tiefdruck, der in der Formgebungskammer (12) gebildet wird, aufrechterhalten wird.

4. Verfahren zur Herstellung eines dreidimensionalen Festkörper durch Sintern, gemäß einem der vorangehenden Ansprüche, **gekennzeichnet dadurch, dass** die Partikel durch Ultraschallmittel am Zusammenballen und Aneinanderhaften während des Flusses gehindert werden, bevor sie auf das Zielgebiet gerichtet werden.

5. Verfahren zur Herstellung eines dreidimensionalen Festkörper durch Sintern, gemäß einem der vorangehenden Ansprüche, **gekennzeichnet dadurch, dass** es vollständig durch ein CAD/CM-System gesteuert ist.

6. Verfahren zur Herstellung eines dreidimensionalen Festkörpers durch Sintern, gemäß einem der vorangehenden Ansprüche, **gekennzeichnet dadurch, dass** das erhitzende Flussmittel aus einem kegelförmigen Laserstrahl (LB) mit einem Spitzenwinkel (β) besteht, der geringer ist als der Spitzenwinkel (α) der kegelförmigen Oberfläche, die durch den pulverförmigen Strom gebildet wird.

7. Verfahren zur Herstellung eines dreidimensionalen Festkörpers durch Sintern von anorganischen Partikeln einer gesteuerten Größenverteilung, gemäß Anspruch 6, **gekennzeichnet dadurch, dass**, um Abschnitte des Gegenstands, wo die hohe Genauigkeit, die eine räumliche Auflösung besser als 50 µm bedingt, nicht erforderlich ist, herzustellen, der Fokussierungsdurchmesser des Laserstrahls (LB) bis auf 150 µm, mit einer einhergehenden Erhöhung der Größe der Partikel im pulverförmigen Strom, erhöht wird.

8. Verfahren zur Herstellung eines dreidimensionalen Festkörpers durch Sintern, gemäß einem der Ansprüche 1 bis 5, **gekennzeichnet dadurch, dass** das erhitzende Flussmittel durch eines der folgenden Mittel erzeugt wird: eine elektromagnetische Induktionsspule, koaxial zu dem pulverförmigen Strom angeordnet, einen strahlenden Hitzegenerator, wie einen Infrarotheizapparat, einen Elektronenstrahl, einen Mikrowellengenerator.

9. Verfahren zur Herstellung eines dreidimensionalen Festkörpers durch Sintern, gemäß einem der vorangehenden Ansprüche, **gekennzeichnet dadurch, dass** es einen abschließenden Schritt umfasst, der aus einem isostatischen Pressen bei hoher Temperatur besteht, um jegliche innere Restporosität zu beseitigen und eine volle Dichte in dem hergestellten Gegenstands zu erreichen.

10. Vorrichtung zur Herstellung eines dreidimensionalen Festkörpers, mit einer räumlichen Auflösung besser als 50 µm, durch Sintern anorganischer Partikel mit einer gesteuerten Größenverteilung, und Anwendung des Verfahrens gemäß einem der Ansprüche 1 bis 9, aufweisend:
- ein starres Zielgebiet,
- Mittel, das ein korrelierendes erhitzendes Flussmittel erzeugt,
- Mittel, das zumindest einen pulverförmigen Strom, aus anorganischen festen Partikeln, mit einer gesteuerten Größenverteilung, erzeugt, und eine Vorrichtung (30) umfasst, gebildet durch einen ersten und einen zweiten, zueinander einstellbaren Kegel (31, 32), die so untereinander verbunden sind, dass ein einstellbarer ringförmiger Spalt (33) zwischen den Kegeln (31, 32) gebildet wird, die ihre Achse (Z) gemeinsam mit dem erhitzenden Flussmittel haben, wobei der pulverförmige Strom die Form einer kegelförmigen Oberfläche hat,
- Antriebsmittel zur Bereitstellung einer zumindest zweidimensionalen Relativbewegung zwischen dem Zielgebiet, der Vorrichtung (30), die den pulverförmigen Strom erzeugt, und dem erhitzenden Flussmittel, wobei die Partikel des pulverförmigen Stroms durch das erhitzende Flussmittel aufgeheizt sind, um so in einem einzigen Arbeitsgang direkt auf das Zielgebiet gesintert zu werden, **gekennzeichnet dadurch, dass** das Zielgebiet auf einer starren Basis (16), gelagert in einer Formgebungskammer (12), die sich unterhalb der Basis (16) in Form eines Bechers (11) erstreckt, vorgesehen ist, ein Anschlussstück (19) am Boden des Bechers (11) für den Anschluss durch rohrförmige Mittel an eine Vakuumquelle angeordnet ist.

11. Vorrichtung zur Herstellung eines dreidimensionalen Festkörpers durch Sintern anorganischer Partikel mit einer gesteuerten Größenverteilung, und Anwendung des Verfahrens gemäß einem der Ansprüche 1 bis 9, aufweisend:
- ein starres Zielgebiet,
- Mittel, das ein korrelierendes erhitzendes Flussmittel erzeugt,
- Mittel, das zumindest einen pulverförmigen Strom, aus anorganischen festen Partikeln einer gesteuerten Größenverteilung, erzeugt, bestehend aus einer Vielzahl von geradlinigen Rohrleitungen (75), die ihre Achsen (T1, T2, ...) im selben Winkel (α), in Bezug auf die Achse (Z) des geradlinigen erhitzenden Flussmittels, in solcher Weise geneigt haben, dass der pulverförmige Strom in der Form einer kegelförmigen Oberfläche koaxial mit dem erhitzenden Flussmittel ist,
- Antriebsmittel zur Bereitstellung einer zumindest zweidimensionalen Relativbewegung zwischen dem Zielgebiet, den geradlinigen Rohrleitungen (75) und dem erhitzenden Flussmittel, wobei die Partikel des pulverförmigen Stroms durch das erhitzende Flussmittel aufgeheizt sind, um so in einem einzigen Arbeitsgang direkt auf das Zielgebiet gesintert zu werden, **gekennzeichnet dadurch, dass**
das Zielgebiet auf einer starren Basis (16), gelagert in einer Formgebungskammer (12), die sich unterhalb der Basis (16) in Form eines Bechers (11) erstreckt, vorgesehen ist, ein Anschlussstück (19) am Boden des Bechers (11) für den Anschluss durch rohrförmige Mittel an eine Vakuumquelle angeordnet ist.

12. Vorrichtung zur Herstellung eines dreidimensionalen Festkörpers durch Sintern anorganischer Partikel einer gesteuerten Größenverteilung, gemäß einem der Ansprüche 10 oder 11, aufweisend:
- eine Emissionsquelle (40) eines Laserstrahls (LB), als Mittel, um das erhitzende Flussmittel zu erzeugen, wobei die Emissionsquelle verbunden mit dem bekannten Fokussiermittel (47) ist, und
- eine Vorrichtung (65), z.B. eine hoch auflösende CCD-Kamera für eine prozessgekoppelte Form- und Dickenkontrolle des hergestellten Körpers.

13. Vorrichtung zur Herstellung eines dreidimensionalen Festkörpers durch Sintern anorganischer Partikel einer gesteuerten Größenverteilung, gemäß einem der Ansprüche 10 oder 11, **gekennzeichnet dadurch, dass** sie eine elektromagnetische Induktionsspule, angeordnet als Mittel zur Erzeugung des erhitzenden Flussmittels, aufweist.

14. Vorrichtung zur Herstellung eines dreidimensionalen Festkörpers durch Sintern anorganischer Partikel einer gesteuerten Größenverteilung, gemäß einem der Ansprüche 10 bis 13 **gekennzeichnet dadurch, dass** sie einen Infrarotwärmeerzeuger, oder einen Elektronenstrahl- oder Mikrowellenerzeuger, als Mittel zur Erzeugung des erhitzenden Flussmittels aufweist.

15. Vorrichtung zur Herstellung eines dreidimensionalen Festkörpers durch Sintern anorganischer Partikel einer gesteuerten Größenverteilung, gemäß einem der Ansprüche 10 bis 14, aufweisend eine Pulverzuführungsvorrichtung mit einer rotierenden Bürste (36), einem Element (41) zur elastischen Verformung der Bürste (36) und versorgt mit einem Trägergas, um den pulverförmigen Strom zur Formgebungskammer als Aerosol mit festen Partikeln (PA) zuzuführen, **gekennzeichnet dadurch, dass** sie ferner Ultraschallmittel aufweist, um zumindest bei einem Teil der Pulverzuführungsvorrichtung das Vibrieren aufrechtzuerhalten, um die Partikel vom Zusammenballen und Aneinanderhaften während des Flusses zu bewahren, bevor sie auf das Zielgebiet gelenkt werden.

16. Vorrichtung zur Herstellung eines dreidimensionalen Festkörpers durch Sintern anorganischer Partikel einer gesteuerten Größenverteilung, gemäß einem der Ansprüche 10 bis 15, **gekennzeichnet dadurch, dass** es an sich bekannte Messgeräte, vorzugsweise ein Pyrometer (80), gerichtet auf das Zielgebiet und einen damit verbundenen Steuerschrank (85) einschließt, um die Temperatur in dem Zielgebiet (11) zu überwachen.

## Revendications

1. Procédé de fabrication d'un objet solide tridimensionnel avec une résolution spatiale ou fenêtre distance meilleure que 50 µm à partir de particules inorganiques formées de plus d'une phase et d'une distribution de taille régulée, dans lequel au moins un courant de poudre desdites particules et au moins un flux de chauffage sont simultanément dirigés sur une zone cible rigide alors qu'au moins un mouvement relatif bidimensionnel est maintenu entre la zone cible, le courant de poudre et le flux de chauffage, et dans lequel le courant de poudre a la forme d'une surface conique ayant pour axe (Z) la direction du flux de chauffage et son sommet (P) sur ladite zone cible et un angle au sommet (α) n'excédant pas 45°, **caractérisé en ce que** la distribution dimensionnelle desdites particules est choisie de telle manière que 90 % en poids des particules ont une taille comprise dans la gamme de 0,5 à 20 µm, lesdites particules étant constituées de cristallites agglomérées d'une taille inférieure à 10⁻⁷ m et mélangées dans le courant de poudre avec au moins un gaz porteur de façon à constituer un aérosol solide, et le flux de chauffage est sélectionné de façon à avoir une largeur sur la zone cible n'excédant pas 20 µm, avec la conséquence que l'objet est fabriqué en une seule opération par frittage des particules directement sur la zone cible, et **en ce que** lesdites particules, dans des courants de poudre différents sélectionnables, sont formées par au moins deux phases, une première phase n'excédant pas 85 % en volume de particules et la somme des autres phases étant d'au moins 15 % en volume de particules et ayant une température de fusion en °C inférieure à 80 % de la température de fusion de ladite première phase, moyennant quoi seules les phases à faible point de fusion sont effectivement fondues pendant ladite opération unique.

2. Procédé de fabrication par frittage d'un objet solide tridimensionnel selon la revendication 1, **caractérisé en ce que** le courant de poudre est dirigé sur la zone cible à une vitesse n'excédant pas 20 m/s.

3. Procédé de fabrication par frittage d'un objet solide tridimensionnel selon la revendication 1 ou 2, **caractérisé en ce que** la zone cible comprend un substrat rigide (S) positionné sur une base rigide (16) qui est supportée de manière amovible dans une chambre de formation (12) s'étendant sous ladite base rigide (16) sous la forme d'une coupe (11) qui est maintenue à une atmosphère régulée avec une teneur en oxygène n'excédant pas 100 ppm à travers une dépression créée dans la chambre de formation (12).

4. Procédé de fabrication par frittage d'un objet solide tridimensionnel selon l'une quelconque des revendications précédentes, **caractérisé en ce que** l'on empêche l'agglomération et l'adhérence des particules pendant l'écoulement avant d'être dirigées sur la zone cible au moyen d'ultrasons.

5. Procédé de fabrication par frittage d'un objet solide tridimensionnel selon l'une quelconque des revendications précédentes, **caractérisé en ce qu'**il est entièrement commandé par un système de CFAO.

6. Procédé de fabrication par frittage d'un objet solide tridimensionnel selon l'une quelconque des revendications précédentes, **caractérisé en ce que** le flux de chauffage est constitué d'un faisceau laser (LB) en forme de cône ayant un angle au sommet (β) inférieur à l'ange au sommet (α) de la surface conique formée par ledit courant de poudre.

7. Procédé de fabrication d'un objet solide tridimensionnel par frittage de particules inorganiques de distribution de taille régulée selon la revendication 6, **caractérisé en ce que**, afin de fabriquer des parties de l'objet où la précision élevée impliquant une résolution spatiale meilleure que 50 µm n'est pas requise, le diamètre de focalisation dudit faisceau laser (LB) est augmenté jusqu'à 150 µm avec une augmentation correspondante de la taille des particules dans le courant de poudre.

8. Procédé de fabrication par frittage d'un objet solide tridimensionnel selon l'une quelconque des revendications 1 à 5, **caractérisé en ce que** le flux de chauffage est généré par l'un quelconque des moyens suivants : une bobine d'induction électromagnétique agencée coaxialement au courant de poudre, un générateur de chaleur rayonnante, tel qu'un chauffage infrarouge, un faisceau d'électrons, et un générateur de micro-ondes.

9. Procédé de fabrication par frittage d'un objet solide tridimensionnel selon l'une quelconque des revendications précédentes, **caractérisé en ce qu'**il comprend une étape finale de pressage isostatique à haute température pour éliminer toute porosité résiduelle interne et parvenir à une pleine densité de l'objet fabriqué.

10. Appareil de fabrication d'un objet solide tridimensionnel ayant une résolution spatiale ou fenêtre distance meilleure que 50 µm par frittage de particules inorganiques avec une distribution de taille régulée et par mise en oeuvre du procédé selon l'une quelconque des revendications 1 à 9, comprenant :
- une zone cible rigide,
- un moyen générant un flux de chauffage corrélé,
- un moyen générant au moins un courant de poudre de particules solides inorganiques avec une distribution dimensionnelle régulée et comprenant un dispositif (30) formé par une première et une seconde zone (31, 32), ajustables l'une à l'autre, reliées l'une à l'autre de telle manière qu'un espace annulaire ajustable (33) est créé entre lesdits cônes (31, 32) ayant leur axe (Z) en commun avec le flux de chauffage, moyennant quoi le courant de poudre a la forme d'une surface conique
- un moyen d'entraînement pour fournir au moins un mouvement relatif bidimensionnel entre la zone cible, le dispositif (30) générant le courant de poudre et le flux de chauffage, moyennant quoi les particules du courant de poudre sont chauffées par ledit flux de chauffage de façon à être frittées en une seule opération directement sur la zone cible,
**caractérisé en ce que** la zone cible est disposée sur une base rigide (16) supportée dans une chambre de formation (12) s'étendant sous ladite base (16) sous la forme d'une coupe (11), une pièce de fixation (19) étant disposée au fond de ladite coupe (11) pour le raccordement à une source de vide par l'intermédiaire d'un moyen formant tube.

11. Appareil de fabrication d'un objet solide tridimensionnel par frittage de particules inorganiques ayant une distribution de taille régulée et mettant en oeuvre le procédé selon l'une quelconque des revendications 1 à 9, comprenant :
- une zone cible rigide,
- un moyen générant un flux de chauffage corrélé,
- un moyen générant au moins un courant de poudre de particules solides inorganiques d'une distribution dimensionnelle régulée, constitué d'une pluralité de tuyaux rectilignes (75) ayant leur axe (T1, T2,...) inclinés au même angle (α) par rapport à l'axe (Z) du flux de chauffage rectiligne, de telle manière que le flux de poudre est sous la forme d'une surface conique coaxiale avec le flux de chauffage,
- un moyen d'entraînement pour fournir au moins un mouvement relatif bidimensionnel entre la zone cible, les tuyaux rectilignes (75) et le flux de chauffage, moyennant quoi les particules du courant de poudre sont chauffées par ledit flux de chauffage de façon à être frittées en une seule opération directement sur la zone cible,
**caractérisé en ce que** la zone cible est disposée sur une base rigide (16) supportée dans une chambre de formation (12) s'étendant sous ladite base (16) sous la forme d'une coupe (11), une pièce de fixation (19) étant disposée au fond de ladite coupe (11) pour le raccord à une source de vide au moyen d'un tube.

12. Appareil de fabrication d'un objet solide tridimensionnel par frittage de particules inorganiques de distribution de taille régulée selon la revendication 10 ou 11, **caractérisé en ce qu'**il comprend :
- un émetteur (40) d'un faisceau laser (LB) comme moyen générant ledit flux de chauffage, l'émetteur étant associé à un moyen de pointage connu (47), et
- un dispositif (65), par exemple une caméra CCD de haute résolution, pour une régulation de forme et d'épaisseur en ligne de l'objet fabriqué.

13. Appareil de fabrication d'un objet solide tridimensionnel par frittage de particules inorganiques de distribution de taille régulée selon l'une quelconque des revendications 10 ou 11, **caractérisé en ce qu'**il comprend une bobine d'induction électromagnétique agencée comme moyen générant ledit flux de chauffage.

14. Appareil de fabrication d'un objet solide tridimensionnel par frittage de particules inorganiques de distribution de taille régulée selon l'une quelconque des revendications 10 à 13, **caractérisé en ce qu'**il comporte un générateur de chaleur infrarouge, un faisceau d'électrons ou un générateur de micro-ondes comme moyen générant ledit flux de chauffage.

15. Appareil de fabrication d'un objet solide tridimensionnel par frittage de particules inorganiques de distribution de taille régulée selon l'une quelconque des revendications 10 à 14, comportant un dispositif d'alimentation en poudre ayant une brosse rotative (36), un élément (41) pour la déformation élastique de ladite brosse (36) et alimenté avec un gaz porteur afin de fournir le flux de poudre à la chambre de formation sous forme d'aérosol solide (PA), **caractérisé en ce qu'**il comprend également un moyen ultrasonore pour maintenir une vibration d'au moins une partie dudit dispositif d'alimentation en poudre pour empêcher l'agglomération et l'adhérence des particules pendant l'écoulement avant d'être dirigées sur la zone cible.

16. Appareil de fabrication d'un objet solide tridimensionnel par frittage de particules inorganiques de distribution de taille régulée selon l'une quelconque des revendications 10 à 15, **caractérisé en ce qu'**il comporte en outre des instruments de mesure connus en soi, de préférence incluant un pyromètre (80) destiné à la zone cible, et un boîtier de commande (85) associé pour surveiller la température au niveau de la zone cible (11).
